# EUROPÄISCHE PATENTANMELDUNG

(11) **EP 3 912 932 A1**
(43) Veröffentlichungstag der Anmeldung: **24.11.2021**
(21) Anmeldenummer: 20175157.5
(22) Anmeldetag: 18.05.2020
(51) Int. Cl.: B65G 17/36, B65G 23/44, B65G 43/02, B65G 17/12

(54) **ELEVATOR MIT WÄGEZELLEN**

(71) Anmelder: Bühler AG, 9240 Uzwil (CH)
(72) Erfinder: ORTÓ, Andrea, 92339 Beilngries (DE); KRÜGER, Torsten, 92339 Beilngries (DE); JOAO HENRIQUE, Kiehn Junior, 92339 Beilngries (DE); KOLLER, Cornelia, 92339 Beilngries (DE)
(74) Vertreter: Vossius & Partner Patentanwälte Rechtsanwälte mbB

(57) **Zusammenfassung**

Die Erfindung umfasst einen Elevator zum vertikalen Transport von Schüttgut mit einem zwischen zwei vertikal beabstandeten Umlenktrommeln (41, 42) umlaufend angeordneten Gurt (9), an dem Einrichtungen zur Aufnahme des Schüttguts angebracht sind und einer Antriebseinheit (5) zum Rotieren einer der Umlenktrommeln (41) zum Antreiben des Gurts (9). Ferner umfasst der Elevator eine Spannvorrichtung (1) zum Einstellen des vertikalen Abstands der Umlenktrommeln (41, 42), wobei eine der Umlenktrommeln (42) als Spanntrommel wirkt, die an der Spannvorrichtung (1) angebracht ist und durch die die Position der Spanntrommel (42) in vertikaler Richtung veränderbar ist. Die Spannvorrichtung (1) weist zumindest eine Wägezelle zur Messung einer auf die Spanntrommel (42) wirkenden Kraft auf.

## Beschreibung

Die vorliegende Erfindung betrifft einen Elevator zum vertikalen Transport von Schüttgut. Insbesondere können mit der vorliegenden Erfindung verschiedene Fehlerzustände wie z.B. Über- oder Unterspannung sowie Längung des Fördermittels erkannt werden, was zu Schieflauf oder Schlupf führt.

Elevatoren oder Gurtbecherwerke werden bevorzugt zum vorwiegend senkrechten Transport von Schüttgütern eingesetzt. Sie können sowohl zum Be- als auch zum Entladen bzw. zum Befüllen und Entleeren verwendet werden. Hierfür sind an einem Gurt oder einer Kette Becher als Fördermittel angebracht, wobei der Gurt oder die Kette mittels Trommeln bzw. Kettenräder umgelenkt wird. Der Gurt oder die Kette wird zwischen den Umlenkpunkten gespannt und mindestens eine der Umlenkvorrichtungen wird im Förderbetrieb angetrieben. Abhängig von der Fördergeschwindigkeit des Transportstrangs kann zwischen Schwerkraft- und Fliehkraftentladung oder einer Kombination aus beidem unterschieden werden.

Während des Betriebs der Anlage kann es aufgrund unterschiedlicher Faktoren zu einer Änderung der Gurtspannung oder zu einem Gurtschieflauf kommen, die Beschädigungen an der Maschine hervorrufen können. In herkömmlichen Maschinen wird dies beispielsweise mittels eines Drehzahlunterschieds der Umlenkvorrichtungen, der einen Hinweis auf geringe Gurtspannung oder Beschädigungen wie z.B. einen Riss geben kann, oder mittels induktiver Schieflaufwächter, Drucksensoren oder Temperatursensoren erkannt.

Die DE 2011 3181 U1 offenbart eine Einrichtung zum Überwachen des (Gerad- bzw. Schief-) Laufs des Fördergurtes eines Gurtbecherwerkes mittels mehrerer induktiver Initiatoren. Die WO 2007/059639 A1 beschreibt eine Vorrichtung zum Erkennen einer Geschwindigkeit und eines Schieflaufs eines Gurtbands mittels Sensoren.

JP S60 228314 A offenbart eine automatische Kontrolle einer Gurtspannung durch die Überwachung eines Motordrehmoments. JP S60 228313 A und JP S60 228312 A beschreiben die Erkennung eines Gurtschieflaufs mittels eines Sensors im Inneren des Gehäuses.

Diese Verfahren des Stands der Technik sind allerdings nicht geeignet, graduelle Veränderungen in den Betriebsparametern festzustellen, und somit kann oftmals nicht rechtzeitig reagiert werden.

Es ist daher eine Aufgabe der vorliegenden Erfindung, eine fehlerhafte Gurtspannung und/oder Schieflauf rechtzeitig zu erkennen und Beschädigungen oder langen Stillstand der Maschine zu vermeiden. Dies wird durch die Merkmale des die Erfindung definierenden unabhängigen Anspruchs gelöst. Die abhängigen Ansprüche beschreiben bevorzugte Ausführungsformen.

Insbesondere umfasst die Erfindung einen Elevator zum vertikalen Transport von Schüttgut mit einem zwischen zwei vertikal beabstandeten Umlenktrommeln umlaufend angeordneten Gurt, an dem Einrichtungen zur Aufnahme des Schüttguts angebracht sind und einer Antriebseinheit zum Rotieren einer der Umlenktrommeln zum Antreiben des Gurts. Ferner umfasst der Elevator eine Spannvorrichtung zum Einstellen des vertikalen Abstands der Umlenktrommeln, wobei eine der Umlenktrommeln als Spanntrommel wirkt, die an der Spannvorrichtung angebracht ist und durch die die Position der Spanntrommel in vertikaler Richtung veränderbar ist. Die Spannvorrichtung weist zumindest eine Wägezelle zur Messung einer auf die Spanntrommel wirkenden Kraft auf.

Ausführungsformen der Erfindung können bevorzugt folgende Merkmale aufweisen.

Bevorzugt weisen die Einrichtungen zur Aufnahme des Schüttguts Töpfe, Becher und/oder Schaufeln auf und/oder der Gurt ist ein aus Gewebe, Kunststoff oder Stahl gefertigter Gurt oder eine aus Rund- oder Laschengliedern gefertigte Kette.

Der Elevator kann einen Elevatorkopf, in dem die durch die Antriebseinheit antreibbare Umlenktrommel angeordnet ist, einen Elevatorfuß, in dem die Spanntrommel angeordnet ist, und einen zwischen Elevatorkopf und Elevatorfuß angeordneten Elevatorschacht aufweisen, durch den der Gurt in vertikaler Richtung geführt wird.

Eine Drehachse der Spanntrommel kann mittels eines Schlittens an einem Gehäuse des Elevators angebracht sein, wobei die vertikale Position des Schlittens mittels einer zwischen dem Gehäuse und des Schlittens angeordneten Spindel einstellbar ist und die Wägezelle zwischen der Spindel und dem Schlitten angeordnet ist und die durch den Schlitten auf das Gehäuse wirkende Kraft misst.

Es kann jeweils ein Schlitten an den beiden Enden der Drehachse der Spanntrommel zum Befestigen der Drehachse angeordnet sein, wobei die beiden Schlitten jeweils mittels Spindeln am Gehäuse befestigt sind, durch die die vertikalen Positionen der beiden Enden der Drehachse senkrecht zur Drehachse jeweils unabhängig voneinander einstellbar sind.

Es kann jeweils eine Wägezelle zwischen den beiden Spindeln und dem jeweiligen Schlitten angeordnet sein.

Die Erfindung umfasst ferner ein Verfahren zur Bestimmung einer Gurtspannung in einem Elevator wie oben beschrieben, wobei die Gurtspannung auf der Basis der durch die Wägezelle gemessenen Kraft ermittelt wird und wobei die Gurtspannung insbesondere anhand einer relativen Abweichung von einem Startwert der durch die Wägezelle gemessenen Kraft bestimmt wird.

Ferner umfasst die Erfindung ein Verfahren zur Bestimmung eines Schieflaufs des Gurts in einem Elevator wie oben beschrieben, wobei das Vorliegen eines Schieflaufs auf der Basis der in den beiden Wägezellen gemessenen Kraft bestimmt wird. Das Vorliegen eines Schieflaufs kann insbesondere durch eine Differenz zwischen der in den beiden Wägezellen gemessenen Kraft bestimmt werden.

Gemäß einem der oben beschriebenen Verfahren kann die gemessene Kraft erfasst und daraus Informationen über die Gurtspannung und/oder den Schieflauf des Gurts berechnet werden.

Ferner kann die gemessene Kraft eine Zugkraft oder eine Druckkraft sein.

Die Informationen über die Gurtspannung und/oder den Schieflauf des Gurts können vorzugsweise grafisch auf einen Computer und/oder einem Smartphone angezeigt werden.

Weiterhin können der Computer und/oder das Smartphone konfiguriert sein, bei einer Abweichung der Gurtspannung von einer gewünschten Gurtspannung um einen Schwellenwert einen Alarm auszugeben.

Die Erfindung wird ferner anhand der folgenden Figuren beschrieben. Es zeigen
- Fig. 1a - 1c: schematische geteilte Außenansichten eines Elevators,
- Fig. 2: eine schematische Darstellung eines Beispiels der vorliegenden Offenbarung,
- Fig. 3: eine schematische Darstellung eines Beispiels der vorliegenden Offenbarung,
- Fig. 4a, 4b: eine schematische Darstellung eines Gurtschieflaufs, und
- Fig. 5: ein Diagramm des Gurtzustands über der Zeit.

Der Aufbau und die Funktionsweise von Elevatoren sind bekannt und sollen hier nicht im Detail beschrieben werden. Es werden daher lediglich die für die vorliegende Erfindung notwendigen Elemente beschrieben. In den Figuren werden gleiche oder ähnliche Elemente mit den gleichen Bezugszeichen versehen.

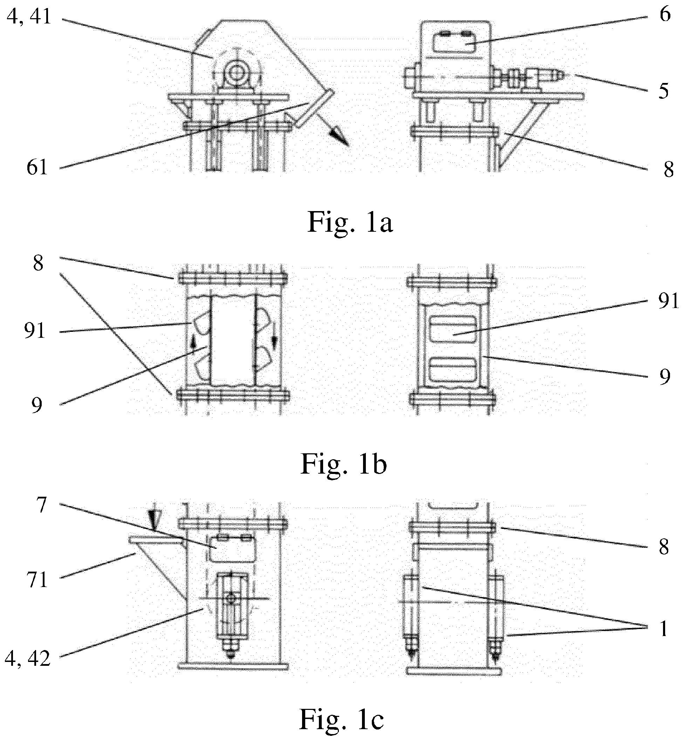

Der prinzipielle Aufbau eines Elevators soll anhand der Figur 1 erläutert werden. Hierin zeigen Figur 1a zwei zueinander um 90° gedrehte Ansichten eines Elevatorkopfes, Figur 1b zwei zueinander um 90° gedrehte Ansichten eines Elevatormittelteils und Figur 1c zwei zueinander um 90° gedrehte Ansichten eines Elevatorfußes.

Elevatoren weisen in der Regel ein Gehäuse auf, das den Elevator umschließt, und werden primär zur Senkrechtförderung von Schüttgut eingesetzt. Dabei können sie sowohl zum Befüllen als auch zum Entleeren eingesetzt werden. Hierfür sind an einem Gurt oder einer Kette, dem sog. Zugmittel 9, Einrichtungen zur Aufnahme des Schüttguts in Form von Fördermitteln 91, insbesondere Töpfe, Becher und/oder Schaufeln, angebracht. Das Zugmittel 9 kann als ein Gurt aus Gewebe, Kunststoff oder Stahl oder als eine Kette mit Rund- oder Laschengliedern gefertigt sein. Zum Umlenken und Spannen des Gurts bzw. der Kette sind voneinander beabstandete Umlenkvorrichtungen 4 vorgesehen. Im Falle eines Gurts können diese als Umlenktrommeln, im Falle einer Kette als Kettenräder ausgeführt sein. Im Folgenden soll die Erfindung beispielhaft anhand eines durch Trommeln umgelenkten Gurts mit Bechern als Fördermittel beschrieben werden, ohne darauf beschränkt zu sein.

Der Gurt 9 ist zwischen zwei vertikal beabstandeten Umlenktrommeln 4, 41, 42 umlaufend angeordnet, wobei mindestens eine der Umlenktrommeln 4, 41, 42 mit einer Antriebseinheit 5 zum Rotieren der Umlenktrommel 4 zum Antreiben des Gurts 9 verbunden ist. Die Umlenktrommeln 4, 41, 42 sind dabei um eine (Dreh-)Achse 3 drehbar angeordnet. Ferner ist eine Spannvorrichtung 1 zum Einstellen des vertikalen Abstands der Umlenktrommeln 4, 41, 42 vorgesehen. Dabei wirkt die Umlenklenktrommel 4, die an der Spannvorrichtung 1 angebracht ist, als Spanntrommel 42. Durch diese ist die Position der Spanntrommel 42 in vertikaler Richtung veränderbar. Mit anderen Worten ist durch eine Abstandsänderung der Umlenktrommeln 4, 41, 42 zueinander die Gurtspannung einstellbar. Die andere Umlenkvorrichtung 4, die von der Antriebseinheit 5 angetrieben wird, kann auch als Antriebstrommel 41 bzw. Antriebsrad bezeichnet werden.

Bevorzugt weist der Elevator einen Elevatorkopf 6, in dem die durch die Antriebseinheit 5 antreibbare Umlenktrommel 41 angeordnet ist, und einen Elevatorfuß 7 auf, in dem die Spanntrommel 42 angeordnet ist. Dabei ist der Elevatorkopf am vertikal oberen Ende, d.h. in Förderrichtung am Auslauf, und der Elevatorfuß am vertikal unteren Ende, d.h. am Einlauf, angeordnet. Zwischen Elevatorkopf und Elevatorfuß ist ein Elevatorschacht angeordnet, durch den der Gurt in vertikaler Richtung geführt wird. Es kann auch zweckdienlich sein, die Antriebseinheit 5 und die Antriebstrommel 41 am Elevatorfuß 7 und die Spannvorrichtung 1 sowie die Spanntrommel 42 am Elevatorkopf 6 anzuordnen.

Die Entleerung kann mittels Schwerkraft-, Fliehkraftentleerung oder einer Kombination aus beidem erfolgen. Dies kann primär durch die Fördergeschwindigkeit eingestellt werden. Der Auslass 61, der in der Regel am Elevatorkopf 6 in Förderrichtung angebracht ist, kann dann dementsprechend angepasst werden.

In herkömmlichen Elevatoren werden die Umlenkvorrichtungen von Fachpersonal gespannt. In der Maschine sind in der Regel Gurtschieflaufsensoren, die beispielsweise induktiv oder mittels eines Temperatursensors einen Gurtschieflauf erkennen, sowie Drehzahlsensoren angebracht, die einen Schlupf aufgrund zu geringer Gurtspannung detektieren. Diese Warnsysteme schlagen jedoch unter Umständen erst sehr spät, zumindest erst nach dem Überschreiten eines Schwellwertes, an, wodurch eine aufwändige Neukalibration notwendig ist. Um dies zu verhindern, wird erfindungsgemäß in Elevatoren eine Spannvorrichtung eingesetzt, die frühzeitig und kontinuierlich Informationen über den Gurtzustand liefern kann.

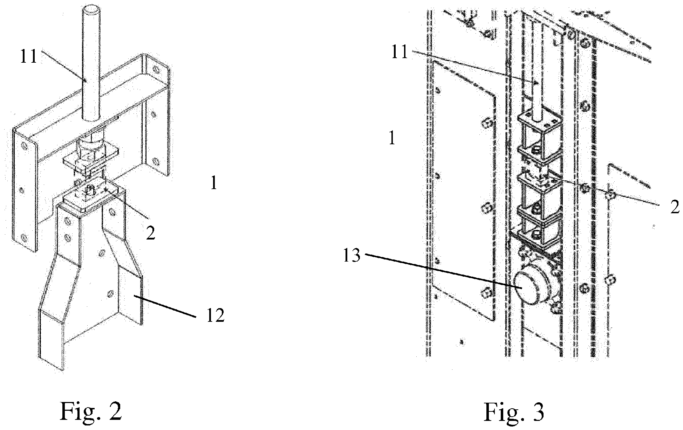

Figur 2 ist eine Detailansicht der Spannvorrichtung 1 gemäß einem Beispiel der vorliegenden Offenbarung. Die Spannvorrichtung weist eine Spindel oder Gewindestange 11 sowie einen Schlitten 12 auf. Es kann auch eine Konsole vorgesehen sein, die auf einen Schlitten geschraubt oder anderweitig befestigt wird. Im Folgenden wird allgemein auf einen "Schlitten" Bezug genommen, dies ist allerdings explizit nicht als einschränkend zu verstehen. An dem Schlitten 12 ist ein Flanschlager 13 angebracht, welches eine Achse 3 der Spanntrommel 42 (nicht gezeigt) führt. Ferner kann der Schlitten 12 vertikal geführt werden. Es kann eine oder es können mehrere Einstellmuttern vorgesehen sein, durch deren Drehung die Gewindestange vertikal verschoben wird. Die Gewindestange dreht sich dabei bevorzugt nicht. Alternativ kann die Gewindestange 11 gedreht werden, wodurch sich die vertikale Position des Schlittens 12 und damit auch der Spanntrommel 42 ändern lässt. Diese Position kann dann beispielsweise mittels Einstell- und Kontermuttern gesichert werden. An beiden Gehäusewänden ist eine solche Spannvorrichtung 1 angeordnet, um beidseitig die Spanntrommel 42 spannen zu können und beispielsweise Schieflauf des Gurts auszugleichen. Statt der gewöhnlich starren Verbindung zwischen Gewindestange 11 und Schlitten 12 ist dort eine Wägezelle 2 angeordnet, die die auftretende Druckkraft bzw. das auf sie wirkende Gewicht aufnimmt. Die Wägezelle 2 misst somit die Kraft, die der Schlitten 12 auf das Gehäuse des Elevators ausübt. Bevorzugt ist die Wägezelle 2 mittels Schrauben fixiert, sodass die Krafteinleitung lediglich vertikal über die Gewindelöcher erfolgt. Der genaue Typ der Wägezelle, d.h. der Messbereich, die maximale Kraftaufnahme, die Geometrie etc., kann je nach Maschinentyp, beispielsweise abhängig von der Elevatorhöhe und -leistung, ausgewählt werden.

Figur 3 zeigt eine Detailansicht eines weiteren Beispiels einer Spannvorrichtung 1 gemäß der vorliegenden Offenbarung, welches funktionell dem Aufbau in Figur 2 entspricht und beispielhaft eine spezielle Einbausituation der Spannvorrichtung 1 zeigt. Hierin wird das Flanschlager 13 mittels einer Führungsplatte und am Gehäuse angebrachten Schienen vertikal geführt. Auch hier ist eine Wägezelle 2 angebracht, die die auftretende Kraft der Spanntrommel entgegen der Gewindestange 11 aufnimmt.

Ändert sich nun die Gurtspannung, beispielsweise aufgrund von Materialermüdung oder Schieflauf, ändert sich auch die Kraft des Gurts auf die Spanntrommel und somit die auf die Wägezelle 2 wirkende Kraft. Wird beispielsweise die Gurtspannung aufgrund von Materialdehnung, -ermüdung oder Rissen geringer bzw. tritt eine Längenänderung des Gurtes auf, so wird auch die auf die Wägezelle 2 wirkende Kraft bzw. das Gewicht geringer. Somit können durch die Änderung in der gemessenen Kraft Rückschlüsse auf einen Fehlbetrieb geschlossen werden. Dabei werden bevorzugt keine absoluten Werte verwendet, sondern relative Abweichungen, die nach der Einstellung und Kalibration durch das Fachpersonal im Betrieb auftreten. Mit diesem Verfahren kann auch eine Über- bzw. Unterspannung des Gurts erkannt werden.

Die Gewindestange 11 der Spannvorrichtung 1 ist mit dem Gehäuse des Elevators verbunden und wird durch Rotation der Einstellmutter(n) (oder durch Rotation der Gewindestange selbst) in vertikaler Richtung verschoben. Dies dient der Spannung des Zugmittels 9 über die Veränderung des vertikalen Abstands der Umlenkvorrichtungen 4 zueinander. Gemäß der vorliegenden Offenbarung wird somit die Kraft einer der Umlenkvorrichtungen 4, der Spanntrommel 42, gegen die Gewindestange 11 bzw. allgemein gegen das Gehäuse gemessen. Die Spanntrommel 42 ist um eine Achse 3 drehbar. Die Achse 3 ist mittels eines Lagers mit dem Schlitten 12 bzw. der Führungsplatte verbunden. Mit anderen Worten wird die Kraft des Schlittens 12 bzw. der Führungsplatte gegen die Gewindestange 11 bzw. das Gehäuse gemessen.

Ferner ist bevorzugt an beiden Seiten der Spanntrommel, d.h. an beiden Spannvorrichtungen 1 eine Wägezelle 2 angebracht. So können auch Differenzen zwischen den Lagerpunkten detektiert werden, um einen Schieflauf zuverlässig erkennen zu können.

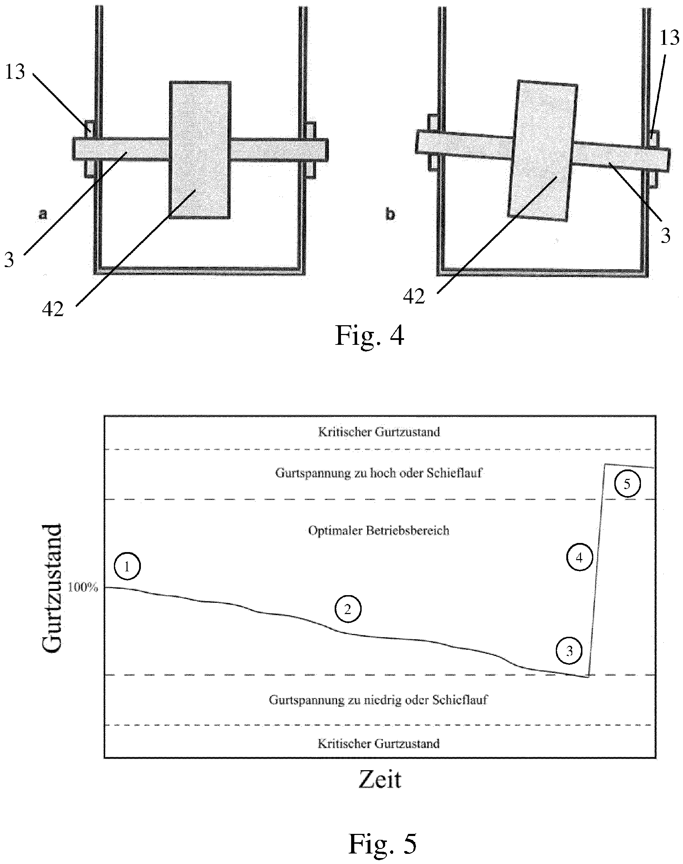

Ein solcher Schieflauf ist in Figur 4b dargestellt, wobei Figur 4a eine korrekte Ausrichtung zeigt. In Figur 4b kommt es aufgrund fehlerhafter Einstellung oder auftretender Veränderungen der Ausrichtung im Betrieb zu einem vertikalen Höhenunterschied zwischen beiden Lagerseiten 13 und somit zu einer nicht horizontal ausgerichteten Achse 3 sowie der Spanntrommel 42. Als Folge läuft der Gurt des Elevators nicht mehr mittig auf der Spanntrommel 42. Dadurch ändert sich auch die aufgenommene Kraft an den Lagern 13 und den Wägezellen im Vergleich zum korrekten Lauf wie in Figur 4a. Auf der stärker gespannten Seite wird daher eine größere Kraft auftreten, die mittels der Wägezellen detektiert und an das Bedienpersonal weitergeleitet werden kann.

Figur 5 ist eine beispielhafte Darstellung des Gurtzustands über der Zeit. Die Werte wurden in einer Vielzahl von Studien und praktischen Erfahrungswerten ermittelt. Dabei wird der optimale Startzustand mit 100% bezeichnet. Das Diagramm weist in der y-Achse (Gurtzustand) unterschiedliche Bereiche auf, die entsprechenden Gurtzuständen zugeordnet sind. So findet sich am oberen Ende ein kritischer Gurtzustand, d.h. kritisch hohe Spannung, darunter zu hohe Spannung oder Schieflauf, im Mittelbereich der optimale Betriebsbereich, darunter zu niedrige Gurtspannung oder Gurtschieflauf und kritisch niedrige Spannung. Die Ziffer 1 bezeichnet den Ausgangszustand, nach dem der Gurt optimal gespannt ist und mittig läuft. Mit der Zeit verringert sich aufgrund von Materialermüdung die Gurtspannung und/oder der Gurt läuft nicht mehr mittig und die Kraft auf die Wägezellen wird dadurch geringer (Ziffer 2). Sobald der untere Schwellwert unterschritten wird (Ziffer 3), wird der Betreiber benachrichtigt und der Gurt wird vom Wartungspersonal nachgespannt (Ziffer 4). Wenn der obere Schwellwert erreicht wird, d.h. die Gurtspannung zu hoch ist, wird der Betreiber ebenfalls benachrichtigt.

Die Werte können ab Werk eingestellt werden, oder maschinenspezifisch bei der Installation ermittelt werden. Ferner kann auch ein akzeptabler Bereich relativer Abweichungen festgelegt werden, der ausgehend von dem Startwert nach der Installation nicht über- bzw. unterschritten werden darf. Insbesondere kann bei der Kalibrierung die Vorspannkraft des Gurtes beachtet werden.

Wie aus der Figur 5 ersichtlich ist, kann mit der erfindungsgemäßen Vorrichtung eine kontinuierliche Überwachung des Gurtzustands sichergestellt werden. Die Vorrichtung kann die Werte drahtgebunden oder drahtlos übertragen. Die Datenübertragung kann kontinuierlich, in Intervallen oder auf manuelle Anforderung erfolgen. Ferner kann die Vorrichtung in ein Netzwerk eingebettet sein und/oder eine Steuereinrichtung zur Auswertung aufweisen und/oder einen Speicher aufweisen. Die Werte können beispielsweise mittels einer Software ausgewertet und an einem Computer oder Smartphone grafisch dargestellt werden. Das verwendete Gerät kann dann bei Abweichung der Gurtspannung von einem gewünschten Wert, d.h. Über- bzw. Unterschreiten eines Schwellenwerts, einen Alarm ausgeben. Somit ist auch die Möglichkeit der Fernüberwachung gegeben. Somit können Beschädigungen und unnötig langer Stillstand der Maschine vermieden werden. Ferner ist eine Prognose für den optimalen Zeitpunkt einer notwendigen Korrektur der Gurtspannung oder den Gurtaustausch möglich.

Durch eine Variation des Aufbaus kann auch anstelle der Drucklast die Zuglast gemessen und ausgewertet werden. Alternativ zu Drucklast- oder Zuglast-Wägezellen können auch Zug- und Drucklast-Wägezellen, Kraftaufnehmer, Kraftmessringe etc. verwendet werden. Ferner kann die vorliegende Erfindung auch mit herkömmlichen Systemen, z.B. Drehzahl- und Schieflaufsensoren, kombiniert werden und an bestehenden Maschinen nachgerüstet werden. Die Erfindung umfasst ebenfalls ein entsprechendes Verfahren zum Nachrüsten einer Maschine. Durch die Kombination verschiedener Sensoren können Genauigkeit und Zuverlässigkeit der Auswertung verbessert werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Liste der Bezugszeichen

- 1: Spannvorrichtung
- 11: Gewindestange/(Spann-)Spindel
- 12: Konsole/Schlitten
- 13: Flanschlager
- 2: Wägezelle
- 3: (Dreh-)Achse
- 4: Umlenkvorrichtung/Umlenktrommel/Kettenrad
- 41: Angetriebene Umlenkvorrichtung/Antriebstrommel/Antriebsrad
- 42: Spannbare Umlenkvorrichtung/Spanntrommel/Spannrad
- 5: Antriebseinheit
- 6: Elevatorkopf
- 61: Auslass
- 7: Elevatorfuß
- 71: Einlass
- 8: Verbindungsteile
- 9: Zugmittel/Gurt/Kette
- 91: Fördermittel/Becher/Töpfe/Schaufeln/Einrichtungen zur Aufnahme von Schüttgut

## Patentansprüche

1. Elevator zum vertikalen Transport von Schüttgut, mit:
einem zwischen zwei vertikal beabstandeten Umlenktrommeln (4, 41, 42) umlaufend angeordneten Gurt (9), an dem Einrichtungen zur Aufnahme des Schüttguts (91) angebracht sind;
einer Antriebseinheit (5) zum Rotieren einer der Umlenktrommeln (41) zum Antreiben des Gurts (9);
einer Spannvorrichtung (1) zum Einstellen des vertikalen Abstands der Umlenktrommeln (4, 41, 42), wobei eine der Umlenktrommeln (4, 41, 42) als Spanntrommel (42) wirkt, die an der Spannvorrichtung (1) angebracht ist, durch die die Position der Spanntrommel (42) in vertikaler Richtung veränderbar ist,
wobei die Spannvorrichtung (1) zumindest eine Wägezelle (2) zur Messung einer auf die Spanntrommel (42) wirkenden Kraft aufweist.

2. Elevator nach einem der vorstehenden Ansprüche, wobei die Einrichtungen zur Aufnahme des Schüttguts (91) Töpfe, Becher und/oder Schaufeln aufweisen und/oder der Gurt (9) ein aus Gewebe, Kunststoff oder Stahl gefertigter Gurt (9) oder eine aus Rund- oder Laschengliedern gefertigte Kette (9) ist.

3. Elevator nach Anspruch 1 oder 2, wobei der Elevator einen Elevatorkopf (6), in dem die durch die Antriebseinheit (5) antreibbare Umlenktrommel (41) angeordnet ist, einen Elevatorfuß (7), in dem die Spanntrommel (42) angeordnet ist, und einen zwischen Elevatorkopf (6) und Elevatorfuß (7) angeordneten Elevatorschacht aufweist, durch den der Gurt (9) in vertikaler Richtung geführt wird.

4. Elevator nach einem der vorstehenden Ansprüche, wobei eine Drehachse (3) der Spanntrommel (42) mittels eines Schlittens (12) an einem Gehäuse des Elevators angebracht ist, wobei die vertikale Position des Schlittens (12) mittels einer zwischen dem Gehäuse und des Schlittens (12) angeordneten Spindel (11) einstellbar ist,
wobei die Wägezelle (2) zwischen der Spindel (11) und dem Schlitten (12) angeordnet ist und die durch den Schlitten (12) auf das Gehäuse wirkende Kraft misst.

5. Elevator nach Anspruch 4, wobei jeweils ein Schlitten (12) an den beiden Enden der Drehachse (3) der Spanntrommel (42) zum Befestigen der Drehachse (3) angeordnet ist, wobei die beiden Schlitten (12) jeweils mittels Spindeln (11) am Gehäuse befestigt sind, durch die die vertikalen Positionen der beiden Enden der Drehachse (3) senkrecht zur Drehachse (3) jeweils unabhängig voneinander einstellbar sind.

6. Elevator nach Anspruch 5, wobei jeweils eine Wägezelle (2) zwischen den beiden Spindeln (11) und dem jeweiligen Schlitten (12) angeordnet sind.

7. Verfahren zur Bestimmung einer Gurtspannung in einem Elevator nach einem der vorstehenden Ansprüche, wobei die Gurtspannung auf der Basis der durch die Wägezelle (2) gemessenen Kraft ermittelt wird,
wobei die Gurtspannung insbesondere anhand einer relativen Abweichung von einem Startwert der durch die Wägezelle (2) gemessenen Kraft bestimmt wird.

8. Verfahren zur Bestimmung eines Schieflaufs des Gurts (9) in einem Elevator nach Anspruch 6, wobei das Vorliegen eines Schieflaufs auf der Basis der in den beiden Wägezellen (2) gemessenen Kraft bestimmt wird,
wobei das Vorliegen eines Schieflaufs insbesondere durch eine Differenz zwischen der in den beiden Wägezellen (2) gemessenen Kraft bestimmt wird.

9. Verfahren nach Anspruch 7 oder 8, wobei die gemessene Kraft erfasst und daraus Informationen über die Gurtspannung und/oder den Schieflauf des Gurts (9) berechnet werden.

10. Verfahren nach einem der Ansprüche 7 bis 9, wobei die gemessene Kraft eine Zugkraft oder eine Druckkraft ist.

11. Verfahren nach einem der Ansprüche 7 bis 10, wobei die Informationen über die Gurtspannung und/oder den Schieflauf des Gurts (9) vorzugsweise grafisch auf einen Computer und/oder einem Smartphone angezeigt werden.

12. Verfahren nach Anspruch 11, wobei der Computer und/oder das Smartphone konfiguriert sind, bei einer Abweichung der Gurtspannung von einer gewünschten Gurtspannung um einen Schwellenwert einen Alarm auszugeben.
